(19) Europäisches Patentamt
European Patent Office
Office européen des brevets

(11) **EP 1 780 590 A1**

(12) **EUROPEAN PATENT APPLICATION**
published in accordance with Art. 158(3) EPC

(43) Date of publication:
**02.05.2007 Bulletin 2007/18**

(51) Int Cl.:
***G02F 1/17*** *(2006.01)*     ***G02F 1/167*** *(2006.01)*

(21) Application number: **05768929.1**

(22) Date of filing: **04.08.2005**

(86) International application number:
**PCT/JP2005/014322**

(87) International publication number:
**WO 2006/018982 (23.02.2006 Gazette 2006/08)**

(84) Designated Contracting States:
**DE FR**

(30) Priority: **19.08.2004 JP 2004239761**

(71) Applicant: **Bridgestone Corporation**
**Tokyo 104-8340 (JP)**

(72) Inventors:
• **SHOJI, Takanori**
**BRIDGESTONE CORPORATION**
**Tokyo 1878531 (JP)**

• **SAKURAI, Ryo**
**BRIDGESTONE CORPORATION**
**Tokyo 1878531 (JP)**
• **AKUZAWA, Kazuyoshi**
**BRIDGESTONE CORPORATION**
**Tokyo 1878531 (JP)**

(74) Representative: **Whalley, Kevin**
**Marks & Clerk**
**90 Long Acre**
**London WC2E 9RA (GB)**

(54) **INFORMATION DISPLAY**

(57) In an information display device having a display panel, wherein one or more kinds of display media are sealed between two opposed substrates, at least one of which is transparent, and wherein the display media, to which an electrostatic field is applied, are made to move so as to display information such as an image or the like, a dummy rib 11 having a cross-sectional shape (any one of L-shaped, U-shaped, rectangular, circular, polygonal, semicircular, I-shaped or step-like shape, a L-shaped partition wall is shown) capable of preventing outflow of conductive paste from a regular applying position has been provided at a predetermined position on the substrate in order to prevent a short circuit between the substrates due to the outflow of the conductive paste applied to a peripheral part of the substrate to allow conduction between upper and lower substrates. An information display device capable of preventing a short circuit between substrates due to the outflow of the conductive paste from the regular applying position is provided.

FIG. 4

## Description

TECHNICAL FIELD

The present invention relates to an information display device having a display panel, wherein one or more kinds of display media are sealed between two opposed substrates, at least one of which is transparent, and wherein the display media, to which an electrostatic field is applied, are made to move so as to display information such as an image or the like. The present invention also relates to an information display panel and an information display device utilizing the particles for the display media.

BACKGROUND ART

As an information display device substitutable for liquid crystal display (LCD), information display devices with the use of technology such as an electrophoresis method, an electro-chromic method, a thermal method, dichroic-particles-rotary method have been proposed.

These conventional techniques are considered to be useful for inexpensive visual display devices of the next generation compared with a LCD due to merits such as wider field of vision close to normal printed matter, lower power consumption or a memory function, and expected to be spread out to information displays for portable devices, electronic paper and the like.
Recently, electrophoresis method for microencapsulating dispersion liquid made up with dispersion particles and coloration solution and disposing the liquid between opposed substrates, is proposed and expected.

However, in the electrophoresis method, there is a problem that a response rate is slow by reason of viscosity resistance because the particles migrate among the electrophoresis solution. Further, there is a problem of lacking imaging repetition stability when information such as an image is rewritten and displayed over and over again, because particles with high specific gravity of titanium oxide are scattered within solution of low specific gravity and it is difficult to maintain a stability of dispersion state. Even in the case of microencapsulating, the cell size is diminished to a microcapsule level in order to make it hard to show the above-mentioned drawbacks, however, an essential problem is not overcome at all.

Besides the electrophoresis method using behavior in the solution, recently, a method that electro-conductive particles and a charge transport layer are installed in a part of the substrate without using solution has been proposed. [The Imaging Society of Japan "Japan Hardcopy '99" (July 21-23, 1999) Transaction Pages 249-252] However, in this method, the structure becomes complicated because the charge transport layer and further a charge generation layer are to be arranged. In addition, it is difficult to constantly charge the electro-conductive particles, and thus there is a drawback on the lack of stability.

As one method for overcoming the various problems mentioned above, an information display device having a display panel is known, wherein one or more kinds of display media are sealed between two opposed substrates, at least one of which is transparent, and wherein the display media, to which an electrostatic field is applied, are made to move so as to display information such as an image or the like. In such an information display device, conventionally conductive paste is applied to the peripheral part of the substrate to allow conduction between upper and lower substrates and electrodes provided in the conductive part are connected to connectors for power feeding so that driving voltage is applied from outside of the device.

The above-mentioned conventional information display device is configured is such a manner that conductive paste is applied in the peripheral part of the substrate to allow conduction between upper and lower substrates. However, no measures are taken against outflow of conductive paste and therefore, following problems may occur. If deviation of alignment between upper and lower substrates or decrease in viscosity occurs when applying conductive paste, the conductive paste outflows from a regular applying position. In this case, a short circuit between electrodes, which are originally not intended to be conductive, occurs.

DISCLOSURE OF INVENTION

It is an object of the present invention to provide an information display device, wherein a dummy rib is provided to prevent a short circuit between electrodes due to outflow of conductive paste from the regular applying position.

In order to achieve the above-mentioned object, an information display device according to the present invention having a display panel, wherein one or more kinds of display media are sealed between two opposed substrates, at least one of which is transparent, and wherein the display media, to which an electrostatic field is applied, are made to move so as to display information such as an image or the like is characterized in that a dummy rib having a cross-sectional shape capable of preventing outflow of conductive paste from a regular applying position is provided at a predetermined position on the substrate in order to prevent a short circuit between the substrates due to the outflow of the conductive paste applied to a peripheral part of the substrate to allow conduction between upper and lower substrates.

In the preferred embodiment of the information display device according to the present invention, the cross-sectional shape of the dummy rib is any one of L-shaped, U-shaped, rectangular, circular, polygonal, semicircular, I-shaped or step-like shape depending on the applying position of the conductive paste and arrangement of the electrodes on the substrates.

According to the information display device of the present invention, in the information display device having a display panel, wherein one or more kinds of display media are sealed between two opposed substrates, at least one of which is transparent, and wherein the display media, to which an electrostatic field is applied, are made to move so as to display information such as an image or the like, a dummy rib having a cross-sectional shape capable of preventing outflow of conductive paste from a regular applying position is provided at a predetermined position on the substrate in order to prevent a short circuit between the substrates due to the outflow of the conductive paste applied to a peripheral part of the substrate to allow conduction between upper and lower substrates. Therefore, even when deviation of alignment between upper and lower substrates or decrease in viscosity occurs when applying conductive paste and thus the conductive paste is going to outflow from a regular applying position, the outflow is prevented by the dummy ribs. That is, a problem of a short circuit between electrodes, which are originally not intended to be conductive, due to the outflow of the conductive paste from a regular applying position can be surely prevented.

BRIEF DESCRIPTION OF DRAWINGS

[Fig. 1] Fig 1 is a schematic view showing one example of the information display panel used in the information display device according to the present invention.

[Fig. 2] Fig 2 is a schematic view showing another example of the information display panel used in the information display device according to the present invention. [Fig. 3] Fig 3 is a schematic view showing still another example of the information display panel used in the information display device according to the present invention.

[Fig. 4] Figs. 4a to 4h respectively show a cross-sectional shape of a dummy rib able to be used in the information display panel of the information display device according to the present invention.

[Fig. 5] Fig. 5 is a schematic view showing one example of a shape of the partition walls in the information display panel of the information display device according to the present invention.

[Fig. 6] Fig. 6 is a schematic view illustrating a configuration that a dummy rib is provided in an example of the information display panel of the information display device according to the present invention.

BEST MODE FOR CARRYING OUT THE INVENTION

Hereinafter, the best mode for carrying out the present invention will be explained in detail with reference to the drawings.

At first, a basic construction of an information display panel of an information display device according to the present invention will be explained. In the information display device of the present invention, an electrostatic field is applied to display media sealed between two opposed substrates of the information display panel by some means. The display media are attracted along a direction of the applied electrostatic field by means of Coulomb's force, and thus the display media can be moved reciprocally by varying a direction of electrostatic field due to a switching operation of potential. Accordingly, an image can be displayed. Therefore, it is necessary to design the information display panel in such a manner that the display media can move evenly and maintain stability during a reciprocal operation or during a reserving state. Here, as to forces applied to the particles for the display media, there are an attraction force between the particles due to Coulomb' force, an imaging force with respect to the electrodes or substrates, an intermolecular force, a liquid bonding force, a gravity and the like.

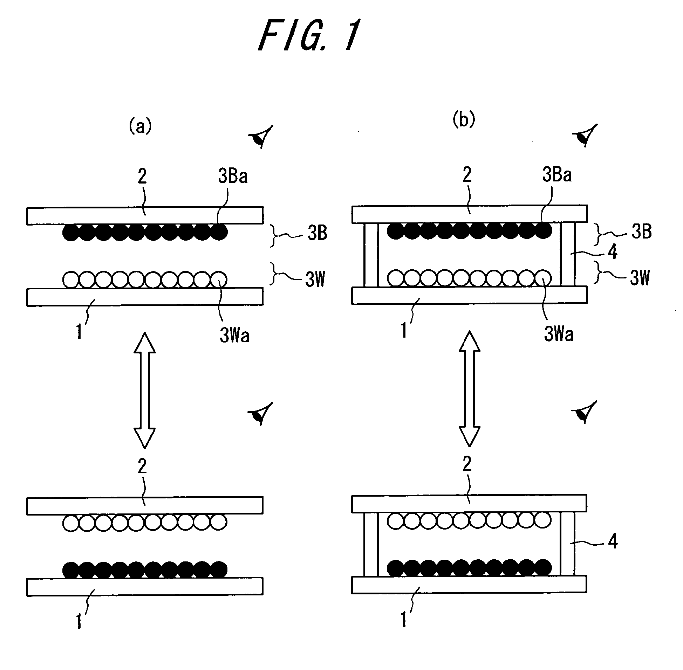

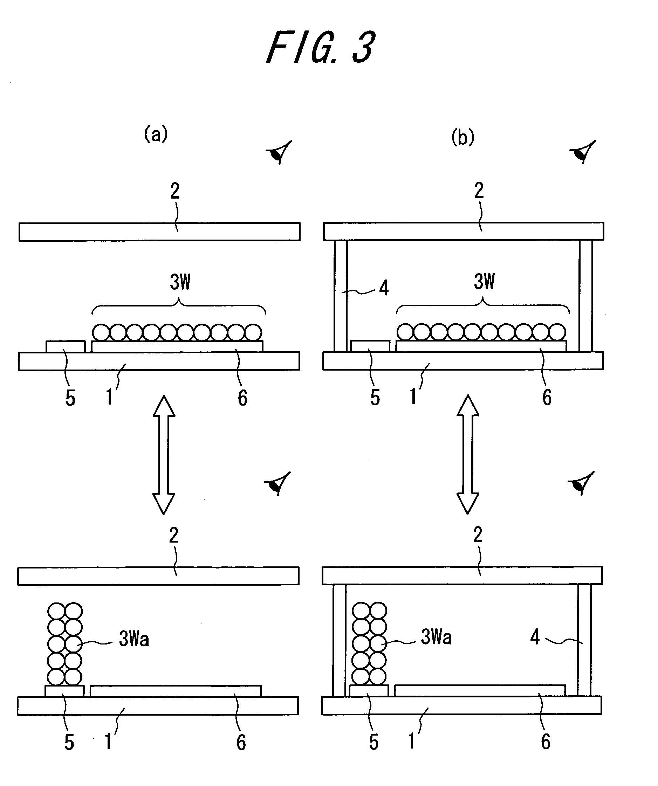

Examples of the information display panel used in the information display device according to the invention will be explained with reference to Figs. 1a and 1b - Figs. 3a and 3b.

In the examples shown in Figs. 1a and 1b, at least two or more groups of image display media 3 having different colors and charging characteristics and consisting of at least one or more groups of particles (here, a white particle 3W and a black particle 3B are shown) are moved in a perpendicular direction with respect to substrates 1 and 2, in accordance with an electric field applied from electrodes (not shown) which are arranged outside of the substrates 1 and 2, so as to display a black color by viewing the black particle 3B to an observer or so as to display a white color by viewing the white particle 3W to the observer. In the example shown in Fig. 1b, for example grid-like partition walls 4 are provided between the substrates 1 and 2 to form a display cell, in addition to the example shown in Fig. 1a. In Fig. 1b, partition walls 4 arranged at a near side are omitted.

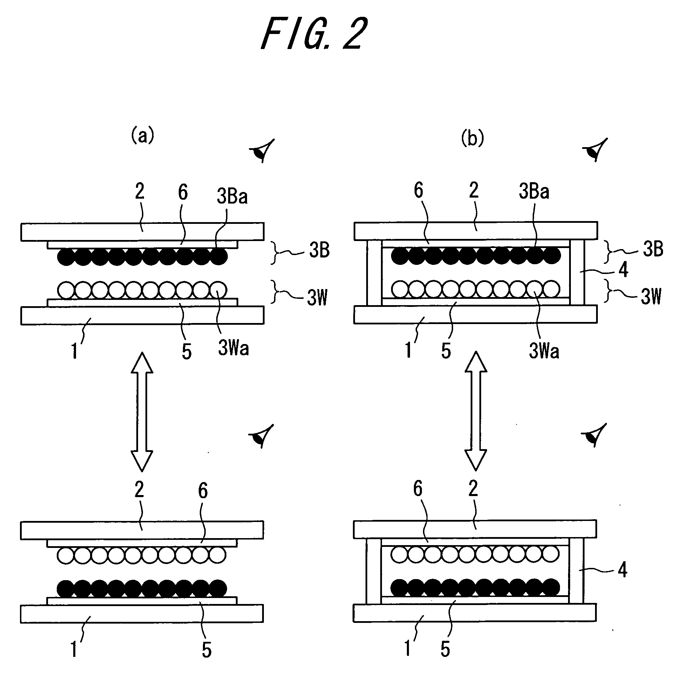

In the examples shown in Figs. 2a and 2b, at least two or more groups of image display media 3 having different colors and charging characteristics and consisting of at least one or more groups of particles (here, a white particle 3W and a black particle 3B are shown) are moved in a perpendicular direction with respect to substrates 1 and 2, in accordance with an electric field generated by applying a voltage between an electrode 5 provided with the substrate 1 and an electrode 6 provided with the substrate 2, so as to display a black color by viewing the black particle 3B to an observer or so as to display a white color by viewing the white particle 3W to the observer. In the example shown in Fig. 2b, for example grid-like partition walls 4 are provided between the substrates 1 and 2 to form a display cell, in addition to the example shown in Fig. 2a. In Fig. 2b, partition walls 4 arranged at a near side are omitted.

In the examples shown in Figs. 3a and 3b, one group of image display media 3 having different optical reflectance and charging characteristics and consisting of at least one or more group of particles (here a white particle 3W is shown) are moved in a perpendicular direction with respect to substrates 1 and 2, in accordance with an electric field generated by applying a voltage between the electrode 5 provided with the substrate 1 and the electrode 6, so as to display a white color by viewing the white particle 3W to an observer or so as to display a color of the electrode 6 or the substrate 1 by viewing a color of the electrode 6 or the substrate 1 to the observer. In the example shown in Fig. 3b, for example grid-like partition walls 4 is provided between the substrates 1 and 2 to form a display cell, in addition to the example shown in Fig. 3a. In Fig. 3b, partition walls arranged at a near side are omitted.

The above explanations can be applied to a case such that the white particles 3W consisting of particles are substituted by white liquid powders or a case such that the black particles 3B consisting of particles are substituted by black liquid powders.

Hereinafter, an information display panel of an information display device according to the present invention will be explained in detail. The information display panel according to the present invention is configured in such a manner that conductive paste is applied to a peripheral part of the substrate to allow conduction between upper and lower substrates. As a measure against overflow of conductive paste, a dummy rib having a cross-sectional shape capable of preventing outflow of conductive paste from a regular applying position is provided at a predetermined position on the substrate.

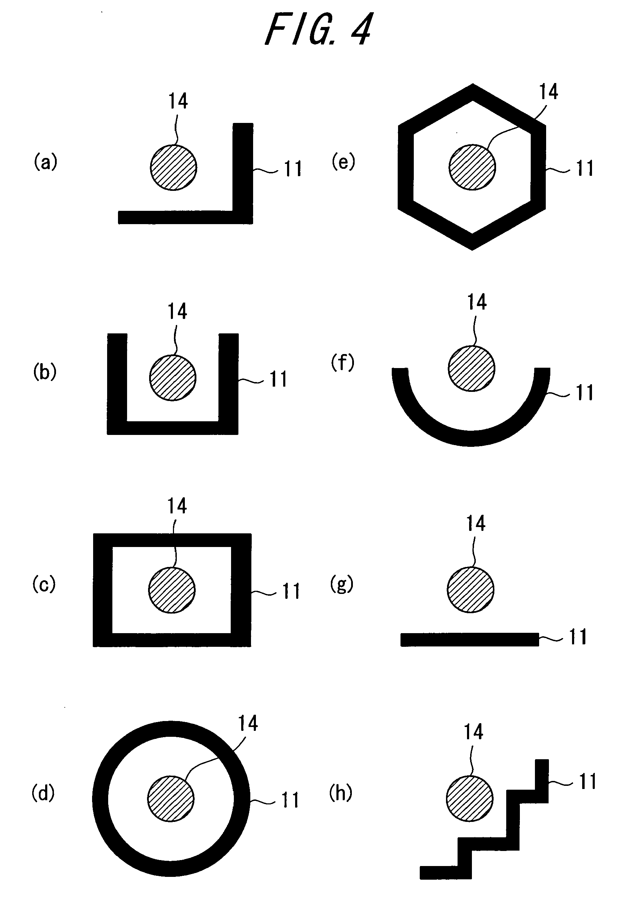

As "a cross-sectional shape capable of preventing outflow of conductive paste from a regular applying position" of the above-mentioned dummy rib, there are various shapes as shown in Figs. 4a to 4h. A "L-shaped" type shown in Fig. 4a is suitable for the case where electrodes are disposed close to two sides of a rectangle surrounding conductive paste, especially preferable where conductive paste is applied to the four corners of the substrate. "U-shaped" type shown in Fig. 4b is suitable for the case where electrodes are disposed close to three sides of a rectangle surrounding conductive paste, especially preferable where conductive paste is applied to the area except for the four corners of the substrate. "Rectangular", "circular" and "polygonal" types shown in Figs. 4c to 4e are suitable for the case where electrodes are disposed close to four sides of a rectangle surrounding conductive paste, especially preferable where conductive paste is applied to the dense peripheral part area with a number of electrodes, except for the four corners of the substrate. "Semicircular", "I-shaped" and "step-like" types shown in Figs. 4f to 4h are suitable for the case where electrodes are disposed close to one side of a rectangle surrounding conductive paste, especially preferable where conductive paste is applied to the four corners of the substrate, in which electrodes are not dense. "A cross-sectional shape capable of preventing the outflow of the conductive paste from a regular applying position" of a dummy rib is not limited to the shapes shown in Figs. 4a to 4h and may be any other shapes capable of obtaining "the function preventing the outflow of the conductive paste from a regular applying position"

According to the information display device of the present invention, in order to prevent a short circuit between the substrates due to the outflow of the conductive paste applied to a peripheral part of the substrate to allow conduction between upper and lower substrates, a dummy rib having a cross-sectional shape, selected from the shapes of the dummy rib shown in Figs. 4a to 4h, capable of preventing the outflow of the conductive paste from a regular applying position is provided at a predetermined position on the substrate depending on the applying position of the conductive paste and arrangement of the electrodes on the substrates. Therefore, even when deviation of alignment between upper and lower substrates or decrease in viscosity occurs when applying conductive paste and thus the conductive paste is going to outflow from a regular applying position, the outflow is prevented by the dummy ribs. That is, a problem of a short circuit between electrodes, which are originally not intended to be donductive, due to the outflow of the conductive paste from a regular applying position can be surely prevented.

Hereinafter, respective members constituting the information display panel of the information display device according to the present invention will be explained in detail.

As for the substrate, at least one of the substrates is the transparent substrate through which a color of the particles can be observed from outside of the display panel, and it is preferred to use a material having a high transmission factor of visible light and an excellent heat resistance. The other back substrate may be transparent or opaque. Examples of the substrate material include polymer sheets such as polyethylene terephthalate, polyethylene naphthalate, polyether sulfone, polyethylene, polycarbonate, polyimide or acryl and metal sheets having flexibility and inorganic sheets such as glass, quartz or the like having no flexibility. The thickness of the substrate is preferably 2 to 5000 $\mu$m, more preferably 5 to 2000 $\mu$m. When the thickness is too thin, it becomes difficult to maintain strength and distance uniformity between the substrates, and when the thickness is thicker than 5000 $\mu$m, it is inconvenient for the thin information display panel.

The electrodes 5, 6 provided if necessary are formed of metals such as aluminum, silver, nickel, copper, gold and so on, transparent conductive metal oxide materials such as ITO, indium oxide, conductive tin oxide, conductive zinc oxide and so on, and conductive polymers such as polyaniline, polypyrrole, polythiophene and so on and appropriately selected. As the method for forming the electrode, the method in which a thin film is formed from the above-listed materials by sputtering method, vacuum vapor deposition method, CVD (chemical vapor deposition) method, and coating method, or the method in which the mixed solution of an conductive agent with a solvent or a synthetic resin binder is applied, are used. Additionally, the thickness of the electrode is preferable to be 3 to 1000 nm, more preferable to be 5 to 400 nm so that the electro-conductivity and optical transparency can be maintained. The material and the thickness of the electrode 5 arranged on the back substrate 1 are the same as those of the electrode 6, but transparency is not necessary. In this case, the applied outer voltage may be superimposed with a direct current or an alternate current.

As for the partition wall 4 provided if necessary, a shape of the partition wall is suitably designed in accordance with a kind of the display media used for the display and is not restricted. However, it is preferred to set a width of the partition wall to 2 - 100 $\mu$m more preferably 3 - 50 $\mu$m and to set a height of the partition wall to 10 - 500 $\mu$m more preferably 10 - 200 $\mu$m. Moreover, there are a double rib method and single rib method as a method of forming the partition wall. In the double rib method ribs are formed on the opposed substrates respectively and then connected with each other. In the single rib method a rib is formed on one of the opposed substrates only. Both methods mentioned above may be preferably applied to the present invention.

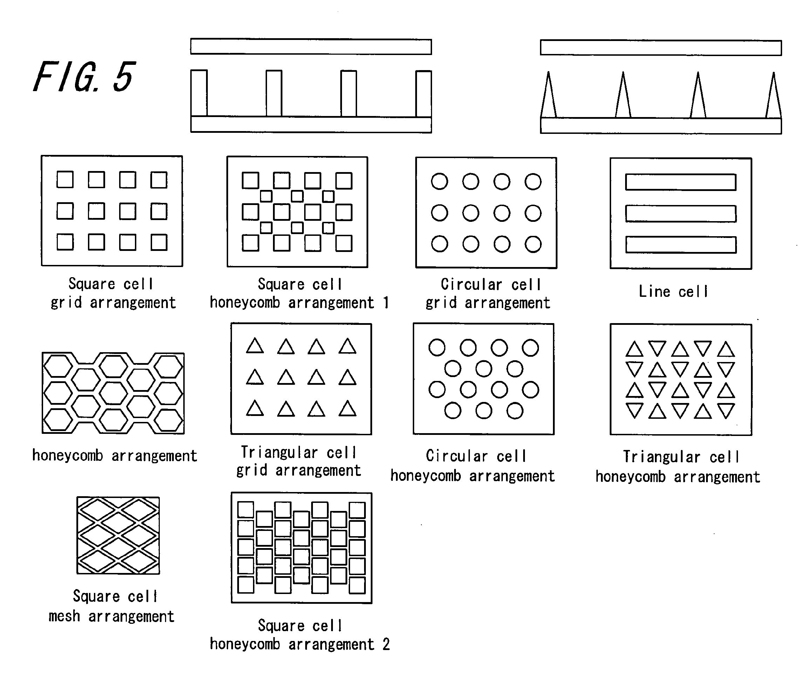

The cell formed by the partition walls each made of rib has a square shape, a triangular shape, a line shape, a circular shape and a hexagon shape, and has an arrangement such as a grid, a honeycomb and a mesh, as shown in Fig. 5 viewed from a plane surface of the substrate. It is preferred that the portion corresponding to a cross section of the partition wall observed from the display side (an area of the frame portion of the display cell) should be made as small as possible, so that sharpness of the image display can be improved. As the formation method of the partition wall there are a die transferring method, a screen-printing method, a sandblast method, a photolithography method and an additive method. Among them, it is preferred to use a photolithography method using a resist film and a die transferring method.

Next, the liquid powders used as the display media in the information display panel according to the present invention will be explained.
In the present invention, a term "liquid powders" means an intermediate material having both of liquid properties and particle properties and exhibiting a self-fluidity without utilizing gas force and liquid force. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass even if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid (Heibonsha Ltd.: encyclopedia). In this way, gas-solid fluidized body and liquid-solid fluidized body are the states using gas and liquid flow. In the present invention, it is found that the intermediate material having both of fluid properties and solid properties and exhibiting a self-fluidity without utilizing gas force and liquid force can be produced specifically, and this is defined as the liquid powders.

That is, as is the same as the definition of the liquid crystal (intermediate phase between a liquid and a solid), the liquid powder according to the invention is a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the information display panel according to the invention, a solid material is used as a dispersant.

In the information display panel according to the present invention, the liquid powders composed of a solid material stably floating as a dispersant in a gas, for example, and exhibiting a high fluidity in an aerosol state are sealed between two opposed substrates, at least one substrate being transparent.
Such liquid powders can be made to move easily and stably by means of Coulomb's force and so on generated by applying a low voltage.
As mentioned above, the liquid powders according to the present invention means an intermediate material having both of liquid properties and particle properties and exhibiting a self-fluidity without utilizing gas force and liquid force. Such liquid powders become particularly an aerosol state. In the information display panel according to the invention, the liquid powders are used in a state such that a solid material is relatively stably floating as a dispersant in a gas.

Next, the particles for the display media used in the information display panel according to the invention will be explained.
The particles mainly formed by resin can contain charge control agent, coloring agent, inorganic additive and the like if necessary. Hereinafter, resin, charge control agent, coloring agent, other additive will be listed.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the adherence to the substrate, acryl urethane resin, acryl silicone resin, acryl fluorocarbon polymers, acryl urethane silicone resin, acryl urethane fluorocarbon polymers, fluorocarbon polymers and silicone resin are particularly preferable.

Though charge control agents are not particularly specified to the following examples, examples of the negative charge control agent include salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative.

Examples of the positive charge control agent include nigrosine dye, triphenylmethane compound, the fourth grade ammonium salt-based compound, polyamine resin and imidazole derivatives. Additionally, metal oxides such as ultra-fine particles of silica, ultra-fine particles of titanium oxide, ultra-fine particles of alumina, and so on, nitrogen-containing circular compound such as pyridine, and so on, and these derivates or salts, and resins containing various organic pigments, fluorine, chlorine, nitrogen and the like can be employed as the charge control agent.

As for a coloring agent, various kinds of organic or inorganic pigments or dye with various colors as described below are usable.

Examples of black pigments include carbon black, copper oxide, manganese dioxide, aniline black, activate carbon and the like.

Examples of blue pigments include C.I. pigment blue 15: 3, C.I. pigment blue 15, Berlin blue, cobalt blue, alkali blue lake, Victoria blue lake, phthalocyanine blue, metalfree phthalocyanine blue, partially chlorinated phthalocyanine blue, first sky blue, Indanthrene blue BC and the like.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, C.I. pigment red 2 and the like.

Examples of yellow pigments include chrome yellow, zinc chromate, cadmium yellow, yellow iron oxide, mineral first yellow, nickel titanium yellow, navel orange yellow, naphthol yellow S, hansa yellow G, hansa yellow 10G, benzidine yellow G, benzidine yellow GR, quinoline yellow lake, permanent yellow NCG, tartrazinelake, C.I. pigment yellow 12 and the like.

Examples of green pigments include chrome green, chromium oxide, pigment green B, C.I. pigment green 7, Malachite green lake, final yellow green G and the like.

Examples of orange pigments include red chrome yellow, molybdenum orange, permanent orange GTR, pyrazolone orange, Balkan orange, Indanthrene brilliant orange RK, benzidine orange G, Indusren brilliant orange GK, C.I. pigment orange 31 and the like.

Examples of purple pigments include manganese purple, first violet B, methyl violet lake and the like.

Examples of white pigments include zinc oxide, titanium oxide, antimony white, zinc sulphide and the like.

Examples of extenders include baryta powder, barium carbonate, clay, silica, white carbon, talc, alumina white and the like. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc oxide, zinc sulphide, antimony oxide, calcium carbonate, pearl white, talc, silica, calcium silicate, alumina white, cadmium yellow, cadmium red, cadmium orange, titanium yellow, Berlin blue, Armenian blue, cobalt blue, cobalt green, cobalt violet, ion oxide, carbon black, manganese ferrite black, cobalt ferrite black, copper powder, aluminum powder and the like.

Inorganic additives among these coloring agents may be used alone or in combination with two or more kinds thereof. Particularly, carbon black is preferable as the black coloring agent, and titanium oxide is preferable as the white coloring agent.

Moreover, it is preferable to use particles according to the present invention, whose average particle diameter $d(0.5)$ ranges between 0.1 to 20 $\mu$m and which are even. If the average particle diameter $d(0.5)$ exceeds this range, the image sharpness is sometimes deteriorated, and, if the average particle diameter is smaller than this range, an agglutination force between the particles becomes too large to prevent the movement of the particles.

Further, in the present invention as for the particle diameter distribution, the particle diameter distribution Span, which is defined by the following formula, is less than 5 preferably less than 3:

$$\mathrm{Span} = (d(0.9) - d(0.1))/d(0.5)$$

(here, $d(0.5)$ means a value of the particle diameter expressed by $\mu$m wherein an amount of the particles having the particle size larger than or smaller than this value is 50%, $d(0.1)$ means a value of the particle diameter expressed by $\mu$m wherein an amount of the particles having the particle size smaller than this value is 10%, and $d(0.9)$ means a value of the particle size expressed by $\mu$m wherein an amount of the particles having the particle size smaller than this value is 90%).

When the Span is set to no more than 5, each particle has a similar particle diameter to perform an even particle movement.

Furthermore, as for a correlation between each particles, it is crucial to set a ratio of $d(0.5)$ of the particles having smallest diameter with respect to $d(0.5)$ of the particles having largest diameter to not more than 50 preferably not more than 10. Even if the particle diameter distribution Span is made smaller, the particles having different charge properties with each other are moved in the opposite direction. Therefore, it is preferred that the particle diameters are formed closely with each other and equivalent amounts of the particles are easily moved in the opposite direction. To this end, the above range is obtained.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution.

In the present invention, the particle diameter and the particle diameter distribution are obtained by a volume standard distribution.

Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

Further, in the present invention, it is important to control a gas surrounding the display media in a gap between the substrates, and a suitable gas control contributes an improvement of display stability. Specifically, it is important to set the relative humidity of the gas in the gap not more than 60% RH at 25°C, preferably not more than 50% RH, more preferably not more than 35% RH. This gap means a gas portion surrounding the display media obtained by substituting occupied portions of the electrodes 5, 6 (in the case of arranging the electrodes inside the substrates), the particles (liquid powders) 3 and the partition walls 4 (in the case of arranging the partition wall) and a seal portion of the information display panel from the space between the opposed substrates 1 and 2 shown in Figs. 1 to 3.

A kind of the gap gas is not limited as long as it has the humidity mentioned above, but it is preferred to use dry air, dry nitrogen gas, dry argon gas, dry helium gas, dry carbon dioxide gas, dry methane gas and so on. It is necessary to seal this gas in the information display panel so as to maintain the humidity mentioned above. For example, it is important to perform the operations of filling the particles or liquid powders and assembling the information display panel under an atmosphere having a predetermined humidity and to apply a seal member and a seal method for preventing a humidity inclusion from outside.

In the information display panel according to the invention, an gap between the substrates may be adjusted so that the display media can be moved to maintain the contrast. The gap is adjusted normally to 10 - 500 $\mu$m, preferably 10 - 200 $\mu$m.

The volume occupied rate of the particles or liquid powders in a space between the opposed substrates is preferably 5 - 70 %, more preferably 5 - 60 %. If the volume occupied rate of the particles or liquid powders exceeds 70 %, the particles or liquid powders may become difficult to move, and if it is less than 5 %, a sufficient contrast cannot be obtained and a sharp image display is not performed.

Though the particles or liquid powders used in gas has been explained as display media used in the present invention, the present invention can be applicable when display media of a microcapsule type including particles of the electrophoresis method is filled.

EMBODIMENTS

Hereinafter, an example is shown so as to explain the present invention further specifically. However, the present invention is not limited to the following example.

(Example 1)

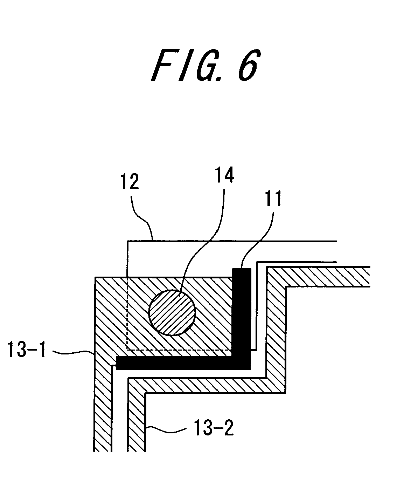

An information display panel of an information display device of Example 1 as shown in Fig. 6, using a "L-shaped" dummy rib shown in Fig. 4a was produced. That is, in the information display panel of Example 1, as shown in Fig. 6, a dummy rib 11 is provided at one of four corners of two opposed substrates. In this case, at one of four corners of the substrates, an ITO electrode 12 of the upper substrate and an ITO electrode 13-1 of the lower substrate are overlapped. Conductive paste 14 is applied to the overlapped area. An ITO electrode 13-2 of the lower substrate is disposed close to the ITO electrode 13-1 of the lower substrate. In order to prevent a short circuit between the ITO electrode 13-1 of the lower substrate and the ITO electrode 13-2 of the lower substrate, the "L-shaped" partition wall 11 shown in the figure is suitable. As the above-mentioned conductive paste 14, silver paste, carbon paste, ACS (Anisotropy Conductive Seal) and the like may be used.

In the information display panel of Example 1, conductive paste 14 is also applied to the other parts, though it is not shown in Fig. 6, in such a manner that each conductive paste 14 having any one of the shapes of the dummy rib shown in Figs. 4a to 4h depending on the applying position of the conductive paste and arrangement of the electrodes on the substrates is appropriately applied to the predetermined position on the substrate.

According to the information display panel of Example 1, a dummy rib 11 having a cross-sectional shape capable of preventing the outflow of the conductive paste from a regular applying position among shapes of dummy ribs shown in Figs. 4a to 4h depending on the applying position of the conductive paste and arrangement of the electrodes on the substrates is provided at a predetermined position on the substrate depending on the applying position of the conductive paste 14. Therefore, even when deviation of alignment between upper and lower substrates or decrease in viscosity occurs in applying conductive paste and thus the conductive paste is going to outflow from a regular applying position, the outflow is prevented by the dummy ribs. That is, a problem of a short circuit between electrodes, which is originally not intended, due to the outflow of the conductive paste from a regular applying position can be surely prevented.

INDUSTRIALLY APPLICABILITY

The information display panel and information display device according to the invention is preferably applicable to the display unit for mobile equipment such as notebook personal computers, PDAs, cellular phones, handy terminals and so on; to the electric paper such as electric books, electric newspapers and so on; to the bulletin boards such as signboards, posters, blackboards and so on; to the image display unit for electric calculator, home electric application products, auto supplies and so on; to the card display unit such as point cards, IC cards and so on; and to the display unit for electric advertisements, electric POPs, electric price tags, electric shelf tags, electric musical score, RF-ID device and so on.

**Claims**

1.  An information display device having a display panel, wherein one or more kinds of display media are sealed between two opposed substrates, at least one of which is transparent, and wherein the display media, to which an electrostatic field is applied, are made to move so as to display information such as an image or the like, **characterized in that** a dummy rib having a cross-sectional shape capable of preventing outflow of conductive paste from a regular applying position is provided at a predetermined position on the substrate in order to prevent a short circuit between the substrates due to the outflow of the conductive paste applied to a peripheral part of the substrate to allow conduction between upper and lower substrates.

2.  The information display device according to claim 1, wherein the cross-sectional shape of the dummy rib is any one of L-shaped, U-shaped, rectangular, circular, polygonal, semicircular, I-shaped or step-like shape depending on the applying position of the conductive paste and arrangement of the electrodes on the substrates.

# *FIG. 1*

# FIG. 2

(a)

(b)

# FIG. 3

(a)

(b)

# FIG. 4

(a) 14 11

(e) 14 11

(b) 14 11

(f) 14 11

(c) 14 11

(g) 14 11

(d) 14 11

(h) 14 11

FIG. 5

Square cell
grid arrangement

Square cell
honeycomb arrangement 1

Circular cell
grid arrangement

Line cell

honeycomb arrangement

Triangular cell
grid arrangement

Circular cell
honeycomb arrangement

Triangular cell
honeycomb arrangement

Square cell
mesh arrangement

Square cell
honeycomb arrangement 2

# FIG. 6

## INTERNATIONAL SEARCH REPORT

| International application No. |
| --- |
| PCT/JP2005/014322 |

A. CLASSIFICATION OF SUBJECT MATTER
Int.Cl⁷ G02F1/17, 1/167

According to International Patent Classification (IPC) or to both national classification and IPC

B. FIELDS SEARCHED

Minimum documentation searched (classification system followed by classification symbols)
Int.Cl⁷ G02F1/17, 1/167, 1/1345

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2004-54233 A  (Sharp Corp.), 19 February, 2004 (19.02.04), Par. Nos. [0036], [0092] & US 2003-214475 A1 | 1-2 |
| Y | JP 3-29832 U  (Citizen Watch Co., Ltd.), 25 March, 1991 (25.03.91), Prior Art Examples; Fig. 2C (Family: none) | 1-2 |
| Y | WO 00/45360 A1  (Seiko Epson Corp.), 03 August, 2000 (03.08.00), Mode 2; Fig. 9 & US 6636192 B1 | 1-2 |

☐ Further documents are listed in the continuation of Box C.      ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 08 September, 2005 (08.09.05) | 27 September, 2005 (27.09.05) |

| Name and mailing address of the ISA/ Japanese Patent Office | Authorized officer |
| --- | --- |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• The Imaging Society of Japan. *Japan Hardcopy '99,* 21 July 1999, 249-252